# EUROPEAN PATENT APPLICATION

(11) **EP 1 802 051 A2**
(43) Date of publication of application: **27.06.2007**
(21) Application number: 06124606.2
(22) Date of filing: 22.11.2006
(51) Int. Cl.: H04L 12/56

(54) **Local and remote switching in a communications network**

(30) Priority: 22.12.2005 US 317995
(71) Applicant: McData Corporation, Broomfield, CO 80021 (US)
(72) Inventor: Palacharla Subbarao, Portland, Oregon (US); Chamdani, Joseph I., Santa Clara, California (US); Fang Yu, Sunnyvale, California (US)
(74) Representative: Moore, Barry

(57) **Abstract**

A method, system or switch device, the switch device including an ASIC creating a switching system within the switch device, the ASIC including an ingress packet processor, an egress packet assembly device, a transmit control device and a routing device; whereby the ingress packet processor is disposed to receive a data packet, the routing device is adapted to route the data packet from the ingress packet processor to the egress packet assembly device and the transmit control device is disposed to control the routing of the routing device; the switch device further including an ingress port communicating with the ASIC and being connectable to one or more external computer network devices, the ingress port being a substantially standard switch port; an egress port communicating with the ASIC and being connectable to one or more external computer network devices, the egress port being a substantially standard switch port; and, an extender port, the extender port being connectable to another extender port in loopback fashion and being connectable to a corresponding extender port of a discrete switch device, whereby the extender port operates on a discrete protocol from the standard ports; whereby the ASIC is adapted to provide for alternatively transmitting a data packet locally to the egress port and remotely through the extender port.

## Description

### TECHNICAL FIELD

This invention relates generally to computer or communications networks such as storage area networks, and more particularly to the hardware, firmware and/or software of one or more switches and the architecture of a switch or switch fabric created by one or more of such switches.

### BACKGROUND

A computer storage area network (SAN) may be implemented as a high-speed, special purpose network that interconnects one or more or a variety of different data storage devices with associated data servers on behalf of an often large network of users. Typically, a storage area network is part of or is otherwise connected to an overall network of computing resources for an enterprise. The storage area network may be clustered in close geographical proximity to other computing resources, such as mainframe computers, or it may alternatively or additionally extend to remote locations for various storage purposes whether for routine storage or for situational backup or archival storage using wide area network carrier technologies.

SANs or like networks can be complex systems with many interconnected computers, switches and storage devices. Often many switches are used in a SAN or a like network for connecting the various computing resources; such switches also being configurable in an interwoven fashion also known as a fabric.

Various limitations in switch hardware and switch architecture have been encountered. These can, for example, be size and scalability limits, as for example where there can be interconnectability limits due, for example, to conventional chassis size limitations. In more detail, a chassis size issue can be attributed to certain hardware limits, some conventional devices currently providing for maximum numbers of switchdevices to be connected therein. These limits may be based upon physical hardware issues within a constrained cha ssis arrangement, as for example, issues related to the provision of appropriate minimum power and/or cooling to the switches disposed or to be disposed within a particular chassis.

In one configuration, switches are assembled in a chassis using a selection of blade components. Individual blade components are fitted into slots in the chassis and connected to a chassis backplane for interconnectivity. For example, line card blades, switch card blades, and other blade components are inserted into a chassis to provide a scalable and customizable storage network switch configuration. Typically, the line card blades are required to be connected to other line cards via switch cards.

### SUMMARY

Implementations described and claimed herein may address one or more of the foregoing problems by providing improvements in methods, systems, hardware and/or architecture of computer or communication network systems. Briefly stated, the primary improvement is in the provision of an apparatus and method for local switching, i.e., switching data packets or frames between conventional ports on one or more ASICs. A further improvement includes directly connecting the ASICs.

In more detail, provided here is a method, system or switch device, the switch device including an ASIC creating a switching system within the switch device, the ASIC including an ingress packet processor, an egress packet assembly device, a transmit control device and a routing device; whereby the ingress packet processor is disposed to receive a data packet, the routing device is adapted to route the data packet from the ingress packet processor to the egress packet assembly device and the transmit control device is disposed to control the routing of the routing device; the switch device further including an ingress port communicating with the ASIC and being connectable to one or more external computer network devices, the ingress port being a substantially standard switch port; an egress port communicating with the ASIC and being connectable to one or more external computer network devices, the egress port being a substantially standard switch port; and, an extender port, the extender port being connectable to another extender port in loopback fashion and being connectable to a corresponding extender port of a discrete switch device, whereby the extender port operates on a discrete protocol from the standard ports; whereby the ASIC is adapted to provide for alternatively transmitting a data packet locally to the egress port and remotely through the extender port.

Accordingly the invention there provides a switch device as claimed in claim 1. Advantageous embodiments are provided in the dependent claims thereto.

Alternatively, the present invention may involve a method of operating a switch in a computer network, the switch containing one or more ASICs, the method including the receiving of a data packet within the switch; the looking up of a destination port address in a look-up table, the destination port address including local or remote information; and the routing of the data packet according to the destination port address and local or remote information.

A further alternative may involve a method of managing a switch fabric in a computer network, the switch fabric containing one or more switch devices, the method including discovering one or more switch devices via any connections extant therebetween; and building a look-up table of port destination information based upon the discovering operation and operating the switch fabric.

Accordingly the invention provides alternative methods of operating a switch in a communications network as claimed in claim 13 and of managing a switch system in a communications network as claimed in claim 15. Advantageous embodiments being provided in the dependent claims thereto.

The technology hereof increases the flexibility of use of one or more switch devices as well as improving the bandwidth in the operation of a switch system

Other implementations are also described and recited herein.

### BRIEF DESCRIPTIONS OF THE DRAWINGS

In the drawings:

FIG. 1 illustrates an exemplary computing and storage framework which may include a local area network (LAN) and a storage area network (SAN).

FIG. 2, which includes sub-part FIGs. 2A, 2B and 2C, illustrates exemplary portions of networks particularly including either a standalone or a plurality of switch devices.

FIG. 3 illustrates an exemplary portion of a network particularly including a plurality of switch devices.

FIG. 4 illustrates a further exemplary portion of an exemplary network particularly including a plurality of switch devices.

FIG. 5 is a schematic view of some operable components within a switch device.

FIG. 6 is a further schematic view of some further operable components within a switch device.

FIG. 7 is yet one further schematic view of some further operable components within a switch device.

FIG. 8 is yet one further schematic view of some further operable components within a switch device.

FIG. 9, which includes sub-part FIGs. 9A, 9B and 9C, schematically illustrates other configurations based on the currently disclosed componentry.

FIG. 10 is a process diagram depicting another implementation of the described technology.

FIG. 11 is a further process diagram depicting another implementation of the described technology.

### DETAILED DESCRIPTION

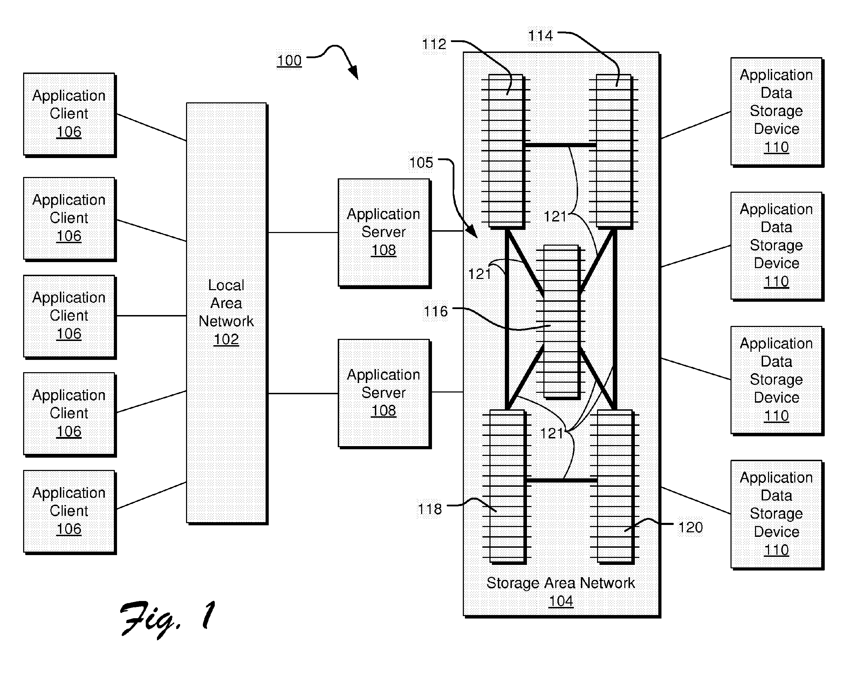

FIG. 1 illustrates an exemplary computing and storage framework 100 including a local area network (LAN) 102 and a storage area network (SAN) 104. Various application clients 106 are networked to representative application servers 108 via the LAN 102. Users can access applications resident on the application servers 108 through the application clients 106. The applications may depend on data (e.g., an email database) stored at/on one or more of the respective application data storage devices 110. Accordingly, the SAN 104 provides connectivity between the application servers 108 and the application data storage devices 110 to allow the applications to access the data they need to operate. It should be understood that a wide area network (WAN) may also be included on either side of the application servers 108 (i.e., either combined with the LAN 102 or combined with the SAN 104).

One or more switches may be used in a network hereof, as for example the plurality of switches 112, 114, 116, 118 and 120 shown in the SAN 104 in FIG. 1. These switches 112-120 are often interconnected to provide a distributed redundant path configuration. Such distributed interconnections, identified generally as interconnections 121 in FIG. 1, create what may be referred to as a fabric 105. Each of the various switches may be connected in redundant manners via plural interconnections 121 to respective pluralities of other switches to ensure that if any particular connection between switches is not active for any reason, then a redundant path may be provided via the other connections and the other switches. Accordingly, such a distributed architecture of the fabric 105 can thus facilitate load balancing, enhance scalability, and improve fault tolerance within any particular switch.

Note, though only one fabric 105 is shown and described, many fabrics may be used in a SAN, as can many combinations and permutations of switches and switch connections. Commonly, such networks may be run onany of a variety of protocols such as the protocol known as Fibre Channel. These fabrics may also include a long-distance connection mechanism (not shown) such as asynchronous transfer mode (ATM) and/or Internet Protocol (IP) connections that enable sites to be separated by arbitrary distances.

Herein, the switches and/or the switching functions thereof are addressed as these reside within each particular switch device, particularly the switch devices hereof which are adapted to operate in alternative or simultaneous discrete modes, as described further below. These adaptabilities may be in the form of intelligence or other capabilities within the switch device to selectively operate in either or both of two discrete modes. Moreover, each of the switchdevices, as described in further detail below, can be provided either in chassis blade form or in a modular form for operability in alternative modes, the modular form providing for standalone independent operation, as well as for stackable or rackable module or device configurations for interconnected operability as described further below. Note, the switches 112-120 shown for example in Fig. 1, may each be individual switch devices or may include a number or plurality of interconnected switch devices.

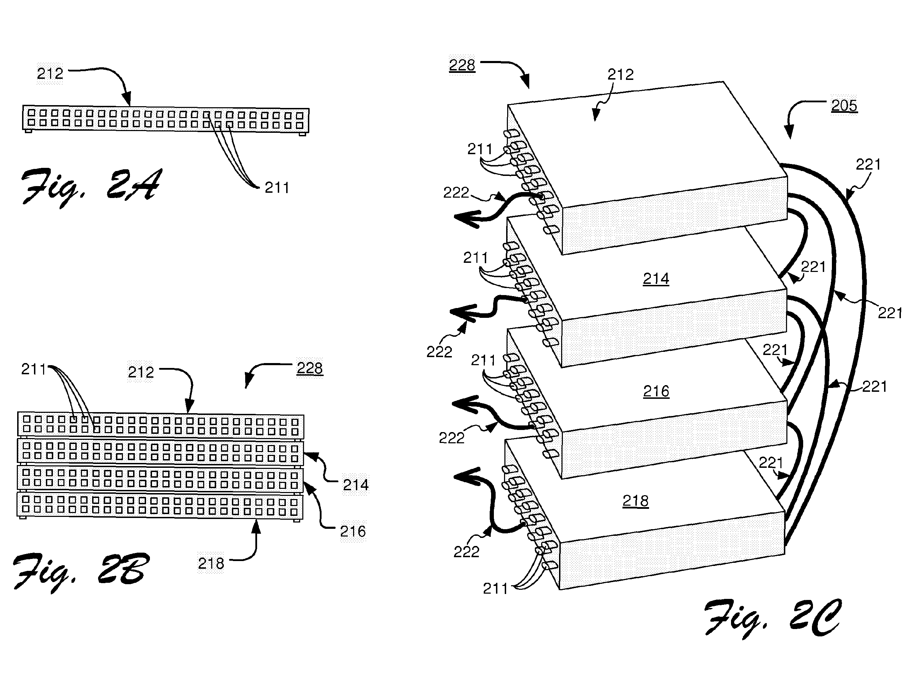

FIG. 2, in the respective sub-part FIGs. 2A, 2B and 2C, illustrates exemplary intelligent switch devices 212, 214, 216, and 218 hereof connected in a variety of fashions. In FIG. 2A, a switch device 212 is shown as it might be disposed for standalone independent use. In FIGs. 2B and 2C, stacks 228 of a plurality of switch devices 212, 214, 216, and 218 are shown. Fibre Channel ports 211 of each intelligent switch device 212, 214, 216, and 218 may be connected to the Fibre Channel ports of the external devices shown in FIG. 1, e.g., to the servers 108 and/or to the storage devices 110. These connections may be made by optical cabling 222 or wired cabling, such as copper cabling (schematically shown in FIG. 2C). If connected together as in FIGs. 2B and 2C, the switch devices may be connected by dedicated ports via dedicated cabling 221 as shown in FIG. 2C (note, these dedicated ports are also referred to herein as extender ports as described below). A switch system205 of switching alternatives may thus be created. Each illustrated switch device may have separate power supplies and cooling mechanisms, although individual switch devices may share power supplies and/or cooling mechanisms in alternative configurations. Note, the switch devices used as building blocks for any of these operational examples may also be referred to as modules, in either case, the switch devices and/or modules generally being respective enclosed packages that may be independently operable (as for example, being capable of providing their own cooling and their own power), as opposed to switches in a blade form, which are dependent for operability on a chassis (as e.g., for cooling and power).

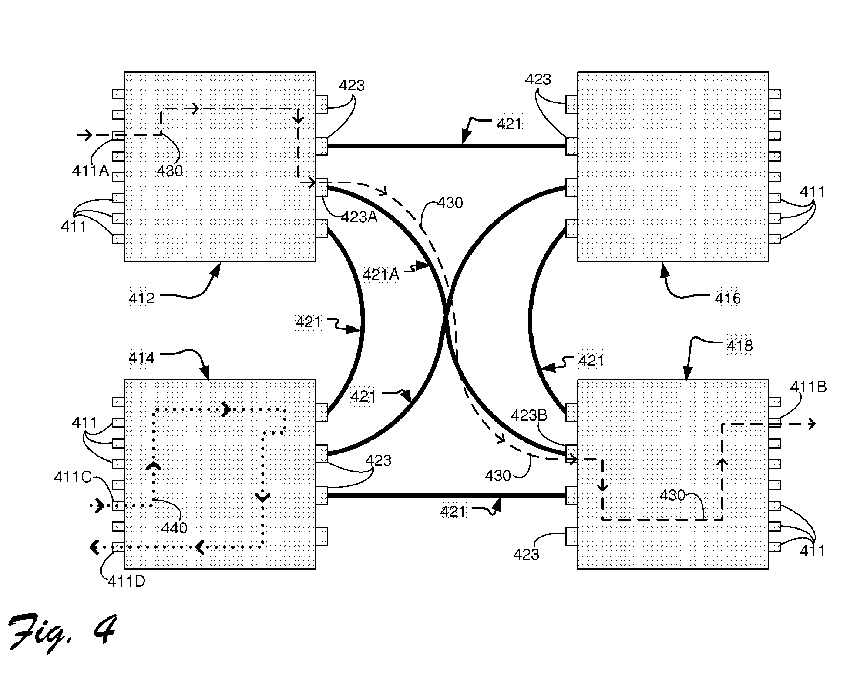

An intelligent switch device according hereto at least provides conventional user ports and basic switching. Such a switch device will also/alternatively be referred to as a ported switch device herein. As introduced above, in one implementation, a single ported switch device may operate as a stand-alone switch (see FIG. 2A). In an alternative implementation, multiple ported switch devices may be interconnected (FIGs. 2B and 2C) via dedicated extender ports (shown more particularly in FIG. 4, see below) to provide a switch system with a larger number of user ports. Interconnection by such dedicated extender ports avoids consumption of the device's user ports and therefore enhances the scalability of the switch system Use of such non-standard extender ports may provide non-standard high performance relative to what may be provided by a standard port protocol (e.g., Fibre Channel) which would have a blocking interconnection. Such non-standard ports may be used in a variety of connection schemes; whether in loopback connections of a device to itself, whether between ported switch devices (also referred to as a stackable configuration) or between ported and unported switch devices (also referred to as a rackable configuration). Though not typical, connections may in some alternatives be made between and amongst ported switch devices as well as between and/or amongst unported switch devices.

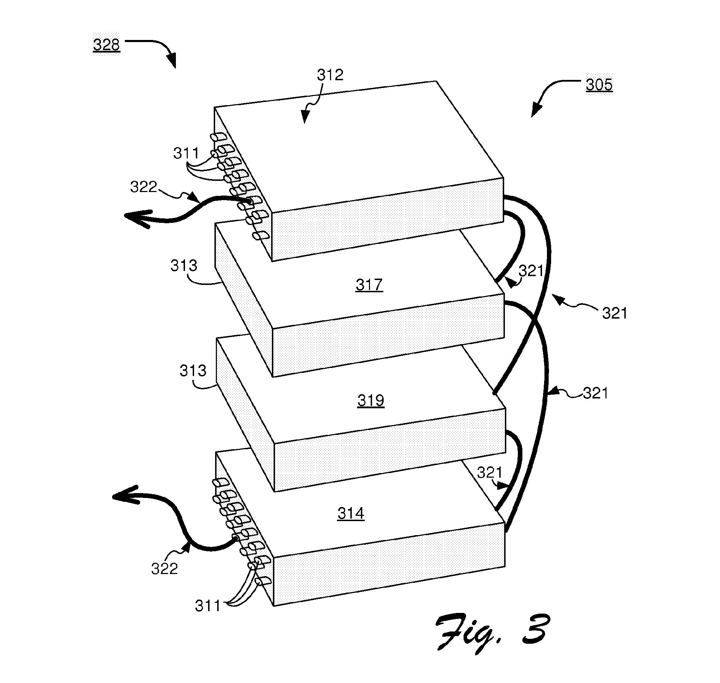

Note, the ported switch devices described herein are distinct from and/or may be contrasted with the unported switch devices also known and used in many implementations for connecting two or more ported switch devices together as shown in FIG. 3. Note, both of the ported and unported switch devices are adapted to provide switching functions and the ported switch device providing user ports for connection to external devices, the unported or non-ported (unported and non-ported being used interchangeably herein) switch device not including such external device connection ports. In FIG. 3, a stack or rack 328 of ported switch devices 312 and 314 are shown stacked and connected with two unported switch devices 317 and 319. As before, the Fibre Channel ports 311 of each ported switch device 312, 314 may be connected to the Fibre Channel ports of the external devices shown in FIG. 1, e.g., to the servers 108 and/or to the storage devices 110. These connections may again be made by optical cabling 322 or wired cabling, such as copper cabling (schematically shown in FIG. 3). The unported switch devices 317, 319 have unported front faces 313 as shown. If connected together as in FIG. 3, the ported switch devices may be connected by dedicated extender ports via dedicated cabling 321 to each of the unported switch devices 317, 319. A switch system 305 of switching alternatives may thus be created. The significance made possible by the local switching of the present disclosure of a distinction between the connection schemes of FIG. 2C from that of FIG. 3 is described further below.

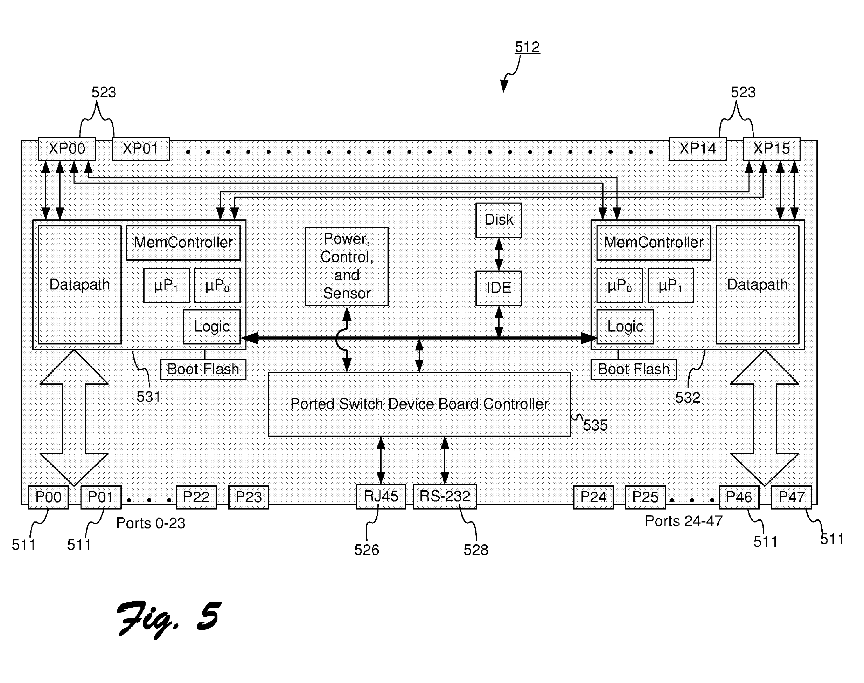

Not shown, is further optional switch service device which in one implementation, may connect to one or more of the switch devices 212-218, or 312-318 via cabling (not shown) to ports such as the RJ45 ports (see FIG. 5 below) on the fronts of the devices and/or to the unported switch devices 317, 319, either in one configuration to a service bus such as an RJ45 port, or in another configuration on the back side s of the devices through an in-band port. The front side RJ45 or like ports on the ported and unported switch devices may be used for the service device to provide maintenance functions or communications (slower, any-to-many, port connections such as provided RJ45 connections may be sufficient for such maintenance functions). Alternatively, one or more service devices can connect via cabling to backplane extender ports in the back of the switch devices 312-318, particularly to unported switch devices 317, 319 so as to provide traffic control functionality through the higher speed extender ports thereof. One further alternative is that the maintenance function can be performed by any switch device (assume or share the role of a service device), and can make these service communications via the extender ports.

Again, in an implementation hereof, multiple ported switch devices 212, 214, 216 and/or 218, or like devices 412, 414, 416 and/or 418 as shown in FIG. 4, are connected to each other via cabling between the dedicated extender ports 423 (discrete from the standard or conventional user ports 411 shown in FIG. 4) in what in the shown implementations are the backs of the switch devices 412-418. Such cabling replaces the chassis hardware backplane or midplane connection board, and as such may be referred to herein as a "soft backplane."

An exemplary back or extender connection scheme is shown in FIG. 4 where in the stack 428, the respective ported switch devices 412, 414, 416 and 418 are shown connected to each of the otherrespective ported switch devices 412, 414, 416 and 418. These connections are shown via the cables 421 and the extender or back ports 423 at the respective rear sides of the devices 412, 414, 416 and 418. This is in contradistinction to the substantially conventional ported connections of similar such ported switch devices via either a hard back or mid-plane connection or through the conventional front ports 411. The conventional front ports 411 would generally remain operable in a conventional or standardized protocol such as the Fibre Channel protocol, while the back or extender ports 423 connected by cables 421 may be operable using an alternative non-standardized protocol. Note, the "front" and "back" descriptors are merely arbitrary identifiers used for highlighting the distinctions shown in the drawings are not intended as required physical limitations as to actual dispositions of any ports or other devices according hereto.

In more detail, FIG. 4 shows a remote switching operation which is indicated by the dashed line labeled 430. The remote switching operation is one in which data enters a switch, here switch 412 via a front port, here port 411A, then travels through the switch 412 where it is determined how and where to send the data, ultimately here being determined to be communicated out the back port 423A, and through the cable 421A to the corresponding back port 423B of switch device 418. From here the data travels through the switch 418 to the destined exit port 411B. Inthis way, the data is switched from one device to and through another, ultimately to be communicated to the receiving device, as for example a storage device or a server as shown in FIG. 1.

According hereto, purely local switching can also be accomplished as shown by the dotted line 440 of a data flow through switch device 414 in FIG. 4. In this example, data enters a front port 411C, travels into the switch 414 where it is determined that the destination port is on the same device 414, and thus a local switching operation is performed and the data then travels through the switch 414 to the egress port 411D.

In any or all of the examples of FIGs. 1, 2, 3, or 4, the ported switchdevices 112-120, 212-218, 312, 314 or 412- 418 may act or at least may have a capability of acting in an independent fashion as a switch system in and of themselves as well as having the capability of fully interconnecting either with other ported switchdevices (or with non-ported switch devices, see FIG. 3). At the macroscopic level, a contribution to the capability for providing either stand-alone independent functionality or combined functionality or both may be attributed to the modularized packaging; namely the self-contained nature of the switch devices themselves. Provided in such a fashion, a ported switch device may be fully operational as a standalone device as is device 212 in FIG. 2A, or may be stacked or racked together with other ported switch devices (or non-ported switch devices) as shown in FIGs. 2B, 2C, 3 and 4.

The making of the ported switch device operational such that it may either operate to provide local switching (as it might in a standalone mode) or to provide remote switching (as in the interconnected mode), or both simultaneously, may involve an adaptation of a ported switch device such that logic is incorporated into the switch device to determine where the data traffic needs to go, local or remote. Then, the switch device can execute and provide for communicating the data to the proper destination, local or remote. Note, this is part of providing a switch system internal to a switch device so that it can communicate data between two or more ports of a single switch device.

Providing such logic for reaching these determinations (local vs. remote) and/or providing for these altered operational states may be implemented through use of one or more components within the ported switch device. FIG. 5 schematically illustrates an exemplary ported switch device 512, which in this implementation includes forty-eight (48) user ports 511 (also referred to as front ports) and sixteen (16) extender ports 523 (also referred to as X ports - XP00 through XP15). The ported switch device 512 may also support a management Ethernet interface 526 (RJ45) and a serial interface 528 (RS-232). Internally, the ported switch device 512 may include at least one Application Specific Integrated Circuit (ASIC), here shown including two switch ASICs 531 and 532, wherein each ASIC may include or be associated with at least one, but here shown including two individual embedded processor cores, a port intelligence processor (PIP) and high level processor (HLP) (e.g., 666 MHz PowerPC 440SPs or some other processor core), these being arbitrarily designated µP0 and µP1 in FIG. 5. The processors may share access to common DRAM and flash memory through the illustrated memory controller in or associated with each ASIC. A device board controller 535 may also be included to manage any arbitration between the ASICs and/or to manage ancillary functions such as device control Ethernet port, or other interface control, display, status LEDs (front and/or back), Real Time Clock (RTC), and/or Vital Product Data (VPD) EEPROM. The ported switch device may also include a power supply and cooling features (e.g., one or more fans), although alternative configurations may receive power from a common (i.e., shared with one or more other devices) power supply and/or receive cooling from a common cooling feature. The device board controller may also control these power and cooling features (e.g., power-on reset events, power failure interrupts, fan speed and the like). The "Power, Control, and Sensor" block shown in FIG. 5 may include power management circuitry, temperature/voltage sensors, and other board control functions for these purposes. Similarly, the disk and/or IDE controller blocks may operate with the Port module board controller to provide non-volatile storage. The ported switch device board controller may also provide low level board management for interfacing with the ASICs, LED displays, sensors, SFPs, and/or optical transceivers for the user ports 511, the x-ports 513, or the like.

Here, each ASIC provides, among other functions, a switched or switchable datapath between a subset of the user ports 511 and the extender ports 523. In particular, the ASIC is adapted for alternatively transmitting a data packet locally to anegress port on the same switch device or on the same ASIC and/or may also transmit the data packet remotely through the extender port. When a packet arrives on a front or conventional user port of an ASIC and it is determined that the packet needs to go out on another conventional port on the same ASIC or same device, there are two choices that can be implemented: (a) locally switch the packet within the ASIC so that it is directly forwarded to the destination port on that ASIC, or (b) send the packet out the extender port to an external switching device where it gets switched and come s back to the same ASIC and then the egress part of the ASIC sends it out on the destination port. Note, for this latter alternative, for a stand-alone ported switch device, its extender ports may be cabled together with loopback cables (in an implementation hereof, each of the extender ports may be connected with loopbacks to another extender port). However, for the former local switching alternative, there is a configuration bit for local switching, which if the bit is turned on by software, then the alternative (a) above is used. Otherwise alternative (b) is used. Thus, when a packet is sent remotely through the extender port it could come back to a port on the same ASIC if local switching is turned off. However, if local switching is turned on, all packets going to ports on the same ASIC are locally switched and are not transmitted over the extender ports. All packets going to ports that are not on the same ASIC are transmitted remotely over the extender ports. For remote switching in a stacked configuration, the extender ports of the ported devices are cabled together as shown for example in FIGs. 2C, 3 and/or 4. For remote switching or for local switching through a remote device in a racked configuration, the extender ports of the ported devices and the non-ported switch devices are cabled together. In one implementation, the extender ports are cabled using four parallel bi-directional optical fiber or high-speed copper links, although other configurations are contemplated. Note also that communications between processors of different ASICs of the same ported switch device as well as processors of different ported switch devices can communicate through the switching system with any other processor in the switch system

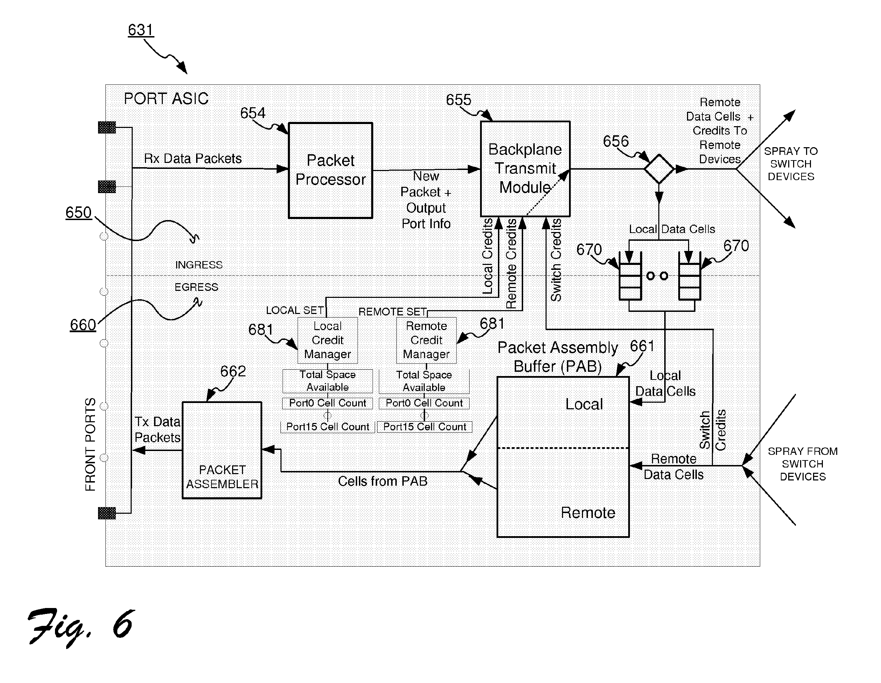

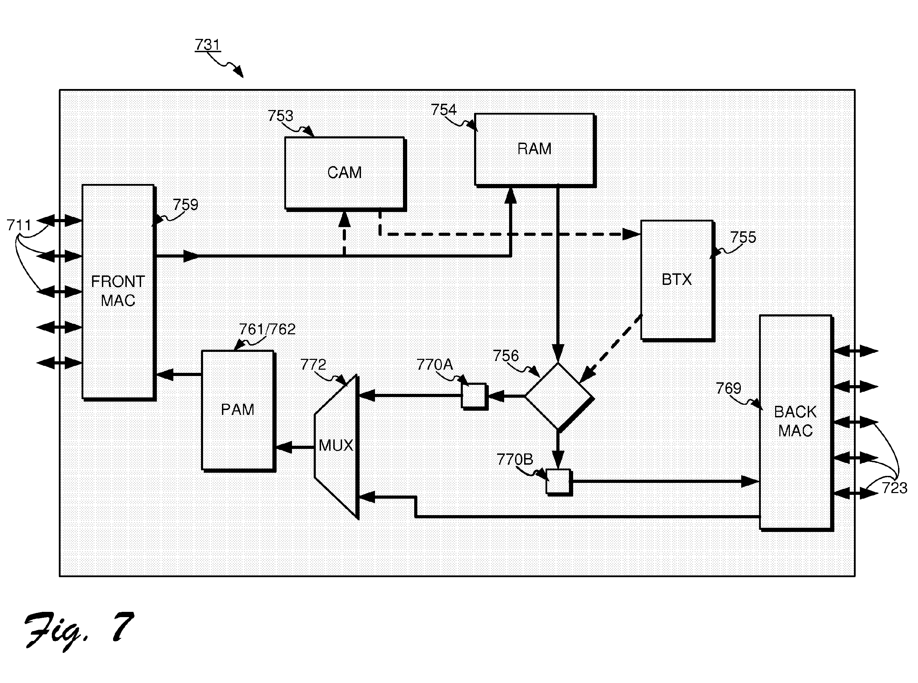

In more particularity, FIGs. 6 and 7 illustrate alternatives of the proposed apparatus and method in the context of a single ported switch device ASICs 631 and 731. Note that these drawings omit many sections of the ASICs 631 and 731 (as for example much of that shown in FIG. 5) to maintain clarity of the description. Starting with the example of FIG. 6, within the ASIC 631 are two parts, an ingress part 650 and an egress part 660. On the ingress side is a packet processor 654, a backplane transmit module (BTX) 655 and a routing module 656. Data packets come into the ingress part 650 to the packet processor 654 and information is transmitted to the BTX 655 which provides further determination as to whether the destination is a local or remote port. This then provides for communication of the data to the routing module 656 where the data is then routed either locally (to the egress side 660 of this ASIC 631, see below) or remotely out of the ASIC and out the switch device (as via the route 430 of FIG. 4). In more detail, the ingress data packets are processed by the Packet Processor (PP) 654 to compute the destination port for each packet. The PP 654 may use a lookup table for this process of determining the destination port for an incoming data packet. The PP 654 then provides this destination port information and a pointer to the packet to the Backplane Transmit Module (BTX) 655. The BTX 655 then examines the destination port and determines whether the destination is local or remote. If the destination port is local on the ASIC, then the BTX sprays the cells of the packet directly to the egress side 660 through the local data cell FIFOs 670. If the destination port is on a remote ASIC, the BTX sprays the cells to the backplane links that connect the local ASIC 631 with the remote ASIC. These cells might be transmitted to the remote ASIC either directly via the backplane links (whether by backplane connection or by the cable connections of FIGs. 2C, 3 and 4) or through a switch card.

On the egress side 660 of the ASIC 631, an egress PAB (Packet Assembly Buffer) 661 is logically partitioned into two sections, called local and remote, to hold cells received either locally from the ingress side of the same ASIC 631, or remotely from each and/or any other directly attached ASIC (i.e., from any other ASIC whether from within the same switch device as ASIC 532 in FIG. 5 or from other connected switch devices, as devices 414, 416 or 418 of FIG. 4). The local part of the PAB 661 holds cells that are locally switched within the same Port ASIC 631 as described further below. The remote PAB holds cells arriving from a remote ASIC. From a flow control point of view, to the Port ASICs, both local and remote, this setup is similar if not identical to the configuration in which they transmit cells to and receive cells from a physically discrete switch card in a distributed switch architecture. The only difference is the smaller effective PAB in the present case. However, by making the PAB big enough, the ASIC 631 hereof and the associated method can support line rate or very close to line rate switching across a number of ASICs.

In more detail, the Egress Packet Assembly Buffer (PAB) 661 in the egress data path may temporarily hold the cells until they are reassembled into packets and the packets are then transmitted out the front ports. A Packet Assembler 662 may be used for this re-assembly. The hardware cost of partitioning the PAB is small since the partitions are logical and the memory (RAM) and associated free lists are still centralized.

A similar implementation is shown in FIG. 7. An ASIC 731 has a plurality of conventional or "front" ports 711 ("front" being a relatively arbitrary means for identifying them, as they conventionally reside on the "front" sides of the switch devices) communicating data through a front MAC 759 ("front" also used here as an arbitrary identifier relative to the particular ports with which the MAC communicates), and in the initial process communicate an ingress packet therethrough which then travels to a Packet Buffer 754, to be held in the RAM thereof. As a part of the Packet Processing, information from the ingress packet is used to look up the destination port from the Content Addressable Memory (CAM) 753. Once found, this destination port information is communicated to the backplane transmit module (BTX) 755 (as shown by the dashed line therebetween). The BTX 755 then uses this information to determine whether the destination port is either local or remote and sends this conclusion information to the routing block 756 which also receives the data packet from the packet buffer 754. The BTX 755 uses its conclusion information about the local or remote characteristic of the destination port to control the routing block to thereby direct the data packet either locally via local FIFO 770A or remotely via FIFO 770B. Remote traffic from FIFO 770B travels to the Back MAC 769 ("back" being an arbitrary descriptor to distinguish from the "front" or other conventional MAC) through which it travels through the extender or "back" ports 723 ("back" here also being an arbitrary descriptor to distinguish these from the conventional or "front" ports) to its ultimate destination port on another ASIC either within this same switch device or to a discrete connected switch.

If the destination port is local, then the data packet cells travels via FIFO 770A to the multiplexer (MUX) 772, and then via the packet assembly module 761/762 to the front MAC 759 and finally to and through the appropriate destination port 711. It may be noted that the ingress data packets are disassembled and sprayed as cells at or by the routing module 756 and/or the FIFOs 770 so that the data cells would need to be reassembled as packets or frames. The packet assembly module (PAM) 761/762 may provide this function here by including a buffer and an assembler, the buffer receiving and holding the cells until the assembler has determined the proper re-assembly thereof and then indicates that the packet can be communicated from the buffer to the MAC. It may also be noted that cells received through the back MAC 769 are also sent through the MUX 772 to the PAM 761/762 for re-assembly apart from the local remote traffic flow hereof. Though only one FIFO 770 each is shown for local vs. remote flow, it may often be that multiple FIFOs are used, one each for each port, ingress and egress.

It may be that the CAM 753 and the RAM 754 are both features of a packet processing module or as in FIG. 6, the Packet Processor (PP) 654. These features may also be described by the ingress characteristic for simplicity. Similarly, the Packet Assembly Module may include the packet buffer and the packet assembler or these may be separated devices that operate as described. These may then be described/modified by the egress modifier for simplicity, as for example as an egress packet assembly device which may be one or both of a packet assembly buffer and/or a packet assembler. It may also be that the "front" and "back" modifiers used herein are not necessary and may indeed inaccurately describe implementations within the scope hereof, i.e., the physical location of the port is not the crucial distinction, rather, the functionality. Thus, the backplane transmitter module may simply be a transmitter module, or transmit control module, a preferable discerning feature hereof being that it may be used to control the routing module. Indeed, the transmit control module and the routing module may also be combined within a single module. The front ports hereof may thus also be referred to as substantially conventional or standard switch ports and the back ports hereof may be referred to as extender ports which operate on a discrete protocol from the standard ports. Typically, the front or conventional ports will run on a Fibre Channel or like protocol for communicating with other SAN devices, where the back or extender ports may, though not necessarily, run on an alternative, discrete protocol.

Thus, when provided and/or turned on, this is how the functionality of the ASIC for alternatively transmitting a data packet locally to the egress port and remotely through the extender port is provided. Locally switching within the ASIC is such that the data packet is directly forwarded to the destination port on that ASIC as opposed to the remote switching which sends the data packet out the extender port. Note, the remote option remains for sending the data packet out the extender port to a switching device where it gets switched and comes back to the same ASIC and then the egress part of the ASIC sends it out on the destination port. In the present ASICs, the functionality may be automatic or it may be configurable for local switching. I.e., this functionality may be configurable to be turned on by software for local switching without any communication via extender ports. Otherwise communication via the extender ports may be used.

Returning to FIG. 6, an optional further feature hereof may be employed for traffic flow control. This may be referred to as Egress Credit Generation In particular, the egress side flow controls the remote source of cells by periodically transmitting the amount of space available in the remote section of the PAB. These messages are known as credits and may be transmitted via the BTX and the backplane links to the remote ASIC. In addition to the total space available, credits also contain cell counts per front port so that the remote source can transmit cells in a fair manner across all front ports. With local switching, the egress controls may also generate credits for the local section of the PAB. The local credits are consumed by the BTX to control the flow of the local data cell path. The credit managers 681 and 682 shown in FIG. 6 may provide this information, and the associated registers are duplicated one for remote and the other for local credit generation. The extra hardware cost is small - only the credit manager and a small number of registers and counters need to be duplicated.

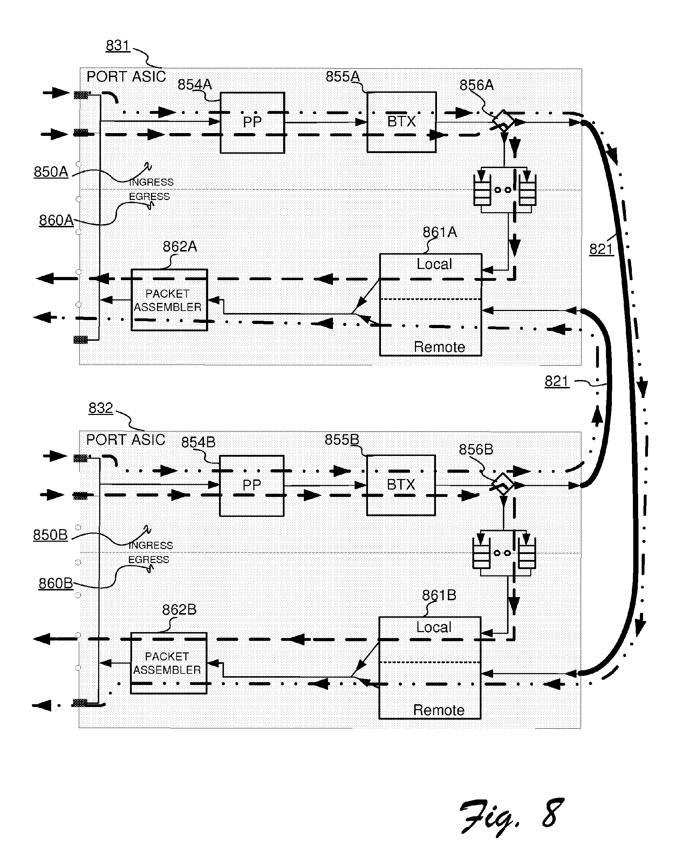

FIG. 8 illustrates how two ASICs 831 and 832 can be connected directly using the componentry hereof. Traffic local to eachASIC is forwarded directly to the respective egress sides 860A and 860B by the respective BTX modules 855A and 855B. Remote traffic is forwarded to the respective egress side s 860B and 860A of the respective remote ASICs via the backplane links 821 connecting the two ASICs. Using this setup, line rate switching can be supported between the two Port ASICs without requiring any switch modules.

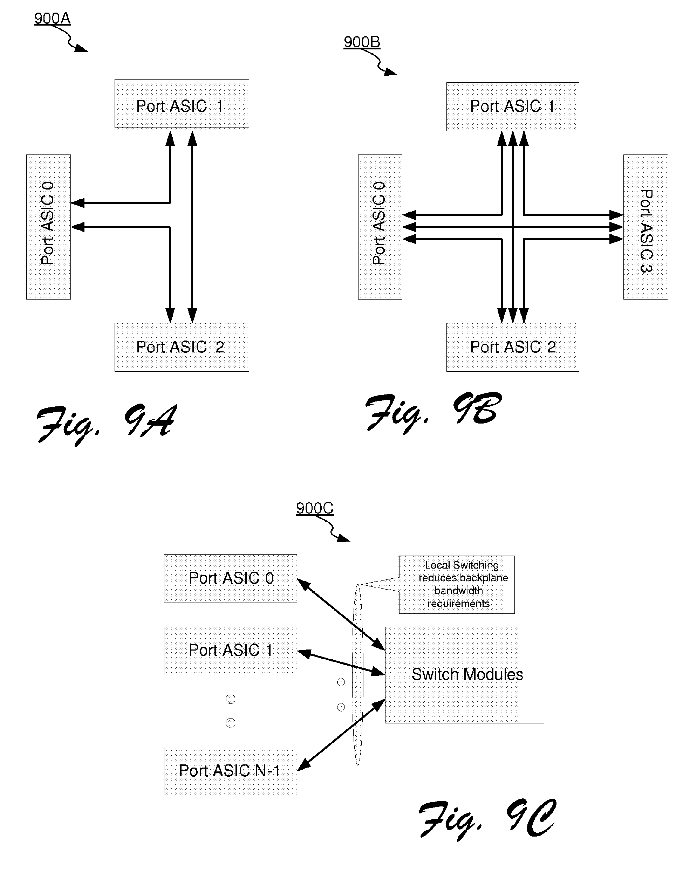

FIG. 9, which includes sub-part FIGs. 9A, 9B and 9C, illustrates other configurations that can be constructed based on the current componentry. The configurations of FIGs. 9A and 9B are straightforward extensions of the two ASIC configurations presented in FIG. 8. In both these configurations, a subset of the backplane links e.g., cabling such as cables 221 in FIG. 2C, may be used to connect an ASIC to every other ASIC in the system. In FIG. 9A, the system 900A includes three ASICs connected to each other, and in FIG. 9B, four ASICs are connected in the system 900B thereof. Like before, packets from remote ASICs are buffered in the remote section of the PAB and packets from the local front ports are buffered in the local section. The configuration of FIG. 9C represents a traditional distributed switch architecture where switching is centralized into one or more switch cards or modules. For this configuration, local switching can lower the backplane bandwidth requirements by locally switching packets within each ASIC. This is the distinction of advantage of an implementation such as that shown in FIG. 2C over that of FIG. 3. I.e., no unported switch devices are necessary to make communications between ports on associated ported switch devices, and as a result, more ported switch devices may be used in the same number of overall devices, thereby delivering a larger number of usable user ports. This assumes that traffic patterns presented to the switch exhibit locality.

It should be understood that the hardware architectures illustrated in FIGs. 6 and 7 and described herein are merely exemplary and that ported switch devices and other switch devices ported or otherwise may take other forms.

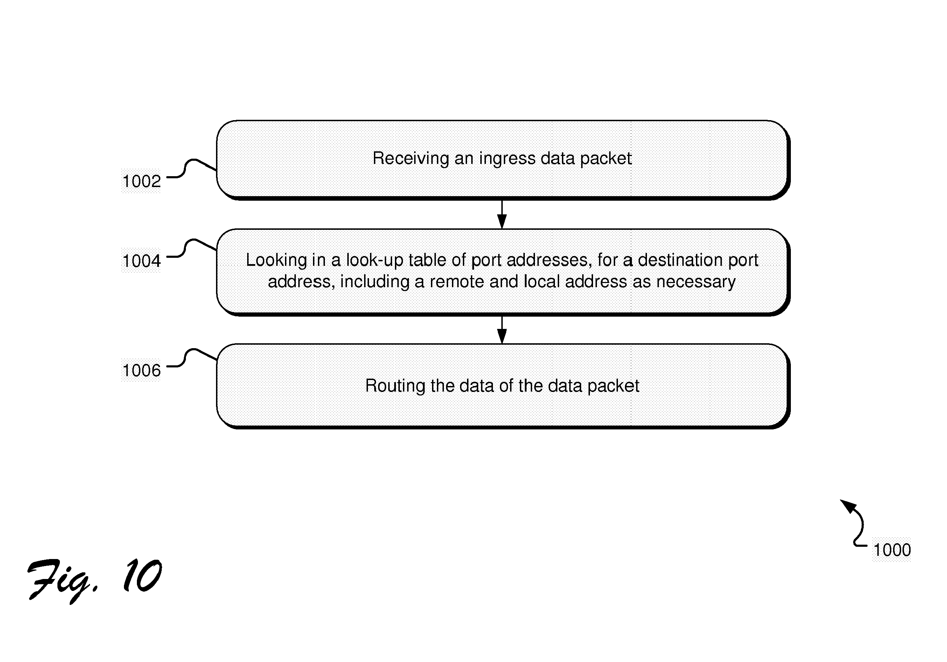

A method of implementation is presented generally in FIG. 10. In general, a method 1000 of operating a switch hereof includes first having the switch receive a data packet as shown by the first operation 1002. Then, as the packet is moved through the switch, including the possibility of buffering it, an operation 1004 of looking in a look-up table for a destination port address may be performed. Once this is generally completed the data is routed to the destination port as indicated by the operation 1006. The destination port address may also include remote and/or local address information, and this information can be found in the look-up operation indicated above; or, the information may be bifurcated and the remote/local characteristic may be kept in a separate table for a secondary look-up operation. Thus, the operation 1004 may include one or more sub-operations. There may be many reasons for the maintenance of separate tables for such information; first, for example, the general port address information may be user configured or user accessible and may include a global list of ports and associated addresses which may not be amenable to the remote or local determination absent a corresponding indication of the source or sources of the ingress data. The sources may not be known until operation has begun, at which point the relative remote or local characteristic can be determined. Moreover, the relative connections of ports and switches may be determined by the switches themselves by auto- or self-discovery as described hereinbelow. Thus, a user or operator maintained look-up table may not preferably be populated by the switch auto- or self-discovery operations.

As mentioned, the making of the ported switch device operational in either a standalone mode or in the interconnected mode may further involve an adaptation of a ported switch device such that it will perform auto - or self-discovery. Typically, self-discovery involves the ability of a switch device to determine what devices, if any, it may be connected to so it will then know how to operate. In particular, discovery messages are sent and/or received and negotiations take place via the connections, particularly via the soft backplane connections (see cables 221 in Fig. 2), between connected devices whereupon the ported switch device can then determine whether the connection is a valid connection for either the standalone mode (loopback connections can be used for standalone mode) or for interconnected operation with either other ported switch devices or non-ported switch devices or both.

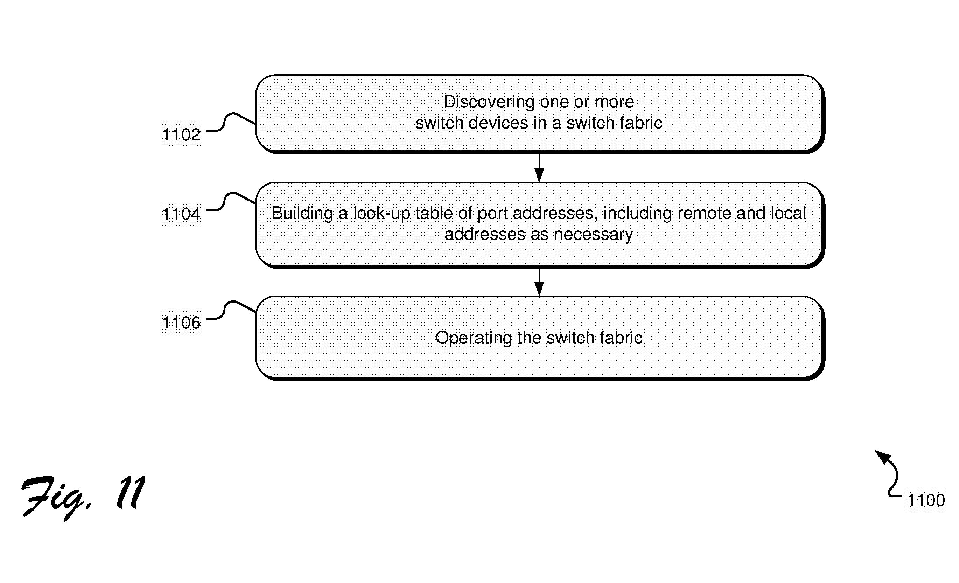

As introduced above and described in more detail below, a discovery operation 1102 of the more generalized identification of a method 1100 of managing a switch system in a computer network, see FIG. 11, may include a staged process in which the low-level processors in a switch and/or between switch devices exchange information in order to determine the number and types of devices connected in or to the switch. In one implementation, a discovery facility within one or more of the microprocessors µP0 and/or µP1 provides this functionality, although other configurations are contemplated.

The devices of a switchsystem are interconnected via high-speed parallel optic transceivers (or their short haul copper equivalent) called extender ports and four lane bi-directional cables called XP links. Two discrete devices are normally connected by at least one cable containing four or more bi-directional fibre pairs; user traffic enters and leaves the system as frames or packets but it transmits over the XP links in parallel as small cells, each with a payload of (approximately) 64 bytes. XP links can carry device-to-device control information in combination with user Fibre Channel and Ethernet data between ported switch devices and non-ported switch devices. The discovery operation 1102 sends a query to the device cabled to each of a device's extender ports and receives identification information from the device, including for example a device ID, a device serial number, and a device type.

The transmission of user frames or packets depends on the proper configuration, by embedded software, for forwarding tables implemented as content addressable memories (CAMs) and "cell spraying masks", which indicate how the parallel lanes of the XP links are connected. Before the CAMs and masks can be properly programmed, subsystems executing in different devices discover one another and determine how the XP links (extender ports) are attached. In one implementation, discovery is accomplished using single cell commands (SCCs), which are messages segmented into units of no more than a single cell and transmitted serially over a single lane of a single extender port, point-to-point.

Devices discover one another by the exchange of SCCs sent from each lane of each extender port. Following a successful handshake, each device adds to its map of XP links that connect it with other devices. In the case of ported switch devices, where there are two processor pairs, each processor pair can communicate via the PCI bus to which they are both connected, intra-device discovery is nevertheless accomplished via the extender ports. Nevertheless, in an alternative implementation, processors within the same device could use internal communication links for intra-device discovery.

In one stage of discovery, termed "self-" or "intra-device" discovery, a single processor in the device will assume the role of device manager. The processor will query its counterpart on the same device to discover the other's presence, capabilities, and health during intra-device discovery. Another stage is termed "inter-device" discovery, in which processors on different devices exchange information. Each processor sends and receives SCCs via each connected extender port to obtain the device ID and device serial number of the device on the other end of the cable.

The discovery process 1102 may be complete in itself, or may include subprocesses such as including recognition of the connected devices, if any; it may include or be included in an initialization or handshaking operation between devices. There may be negotiations between devices and/or there may be agreement or disagreement involved as well. For example, there may be agreement or disagreement between two ported switch devices about the connection or recognition (or about some other part of the discovery) operation. There may be confirmation and/or verification operation(s); there may be separate establishment operations. Or, any or all of these steps may be implicit within the discovery process itself, i.e., where a discovery request is sent by one device to another, there may be an implicit determination of the connection based upon the response or lack thereof. Thus, the discovery operation may itself establish to the satisfaction of the respective devices what is and how the connection of devices is accomplished so that operation of the switch system may commence.

As a further operation, either as a part of the discovery operation, or as a separate step, a look-up table can be constructed 1104 of the relative remote and local characteristics of the ports relative to each other. Such a table can be constructed by each of the respective switch devices in a system, even if only one standalone switch device is included. In one implementation, such a table can be constructed by and/or be located in or be accessible by the BTX module for use as described above in controlling the routing module.

Once the discovery operation 1102 and the look-up table construction 1004 have been completed, the operation 1106 of the switch system may then be achieved. In this, frames may then be sent through the switch system and be routed locally and/or routed remotely as described above. Cells of the frames are sprayed and the frames reach their respective destinations, whether in/to servers or storage devices.

The embodiments of the invention described herein may be implemented as logical steps in one or more computer systems. The logical operations hereof may thus be implemented (1) as a sequence of processor-implemented steps executing in one or more computer systems and/or (2) as interconnected machine or circuit modules within one or more computer systems. The implementation is a matter of choice, dependent on the performance requirements of the computer system implementing the invention. Accordingly, the logical operations making up the embodiments of the invention described herein are referred to variously as operations, steps, objects, or modules. Furthermore, it should be understood that logical operations may be performed in any order, unless explicitly claimed otherwise or a specific order is inherently necessitated by the claim language.

In some implementations, articles of manufacture are provided as computer program products. One implementation of a computer program product provides a computer program storage medium readable by a computer system and encoding a computer program. Another implementation of a computer program product may be provided in a computer data signal embodied in a carrier wave or other communication media by a computing system and encoding the computer program.

The apparatus and method hereof may provide one or more of the following benefits. They may reduce the total system cost for small configurations. For small configurations, e.g. a system with a single switch device module containing two ASICs, the method obviates the need for switching modules. The ASICs in the switch device module are directly connected via the backplane links to switch frames between the ASICs. Similarly, the method and/or apparatus may reduce the backplane bandwidth requirements. By locally switching cells within an ASIC, the backplane bandwidth required to switch frames to remote ASICs is reduced. This assumes that there is locality in the traffic i.e. significant fraction of the traffic ingressing on a front-port is directed to one or more front-ports on the same ASIC. This is very likely in a hierarchical data center configuration. Moreover, the presently disclosed apparatus and methods facilitate standalone testing of switch device modules. Since frames are locally switched inside a module, testing an individual switch device module does not require switch modules. This greatly reduces resource requirements for manufacturing and system testing. A benefit hereof may be that it may simplify implementation complexity of local switching since the method operates within an existing flow control scheme (credits and packet grants) of the distributed switch architecture. It does not require a separate flo w control scheme for local switching. Note, in such an existing flow control scheme, packet- grant cells can be used as part of the flow control scheme to untangle a congested situation where the PAB 661 is near full due to partial frames/packets waiting for their remaining cells. The packet- grant cells can then provide information to the ingress side (BTM 655 or BTX 755) to send specific cell(s) required to complete a frame/packet assembly and free up PAB space.

The above specification, examples and data provide a complete description of the structure and use of exemplary embodiments of the invention. Since many embodiments of the invention can be made without departing from the spirit and scope of the invention, the invention resides in the claims hereinafter appended. Furthermore, structural features of the different embodiments may be combined in yet another embodiment without departing from the claims.

## Claims

1. A switch device which is adapted to be operable as a switch system in an independent standalone mode as well as being adapted to be operable in conjunction with one or more additional switch devices; the switch device comprising:
a hous ing containing:
at least one ASIC creating a switching system within the switch device, the ASIC including an ingress packet processor, an egress packet assembly device, a transmit control device and a routing device; whereby the ingress packet processor is disposed to receive a data packet, the routing device is adapted to route the data packet from the ingress packet processor to the egress packet assembly device and the transmit control device is disposed to control the routing of the routing device;
an ingress port communicating with the ASIC and being connectable to one or more external computer network devices, the ingress port being a substantially standard switch port;
an egress port communicating with the ASIC and being connectable to one or more external computer network devices, the egress port being a substantially standard switch port; and,
an extender port, the extender port being connectable to another extender port in loopback fashion and being connectable to a corresponding extender port of a discrete switch device, whereby the extender port operates on a discrete protocol from the standard ports;
whereby the ASIC is adapted to provide for alternatively transmitting a data packet locally to the egress port and remotely through the extender port.

2. A switch device according to claim 1 wherein the ingress packet processor includes at least one of a look-up table of port destinations wherein the look-up table may include remote and local characteristics of the port destinations, and/or an ingress packet buffer.

3. A switch device according to any preceding claim wherein the transmit control device includes a second look-up table and wherein the second look-up table includes remote and local characteristics of the port destinations.

4. A switch device according to claim 3 wherein the transmit control device uses the remote and local characteristics of the port destinations to control the routing of the data packet by the routing device.

5. A switch device according to any preceding claim wherein the egress packet assembly device includes at least one of: one or both of a packet buffer and a packet assembler, and/or a packet buffer which includes a local data portion and a remote data portion; and
wherein the ASIC further comprises a local credit manager in communication with the local data portion of the packet buffer and a remote credit manager in communication with the remote data portion of the packet buffer.

6. A switch device according to claim 5 wherein the egress packet assembly includes a packet buffer and the packet buffer includes a local data portion and a remote data portion.

7. A switch device according to claim 6 wherein the routing device routes the data packet to one of the local data portion of the packet buffer and a remote data portion of a discrete switch device via the extender port.

8. A switch device according to any preceding claim wherein the ASIC further comprises firmware to be executed by the microprocessor, the firmware bein g adapted to provide discovery of connections to the extender ports and wherein,
the discovery being one or more of auto-discovery, inter-device discovery, intra-device discovery, and self-discovery, and/or
the discovery providing for the ported switch device to be operable in either as a standalone or in conjunction with a discrete non-ported switch device.

9. A switch device as claimed in any preceding claim having a plurality of ASICs, wherein the plurality of ASICs are connected eachone to each other ASIC, and
wherein each of the plurality of ASICs are adapted to transmit a data packet locally or remotely to any of the other connected ASICs.

10. An ASIC for use in a switch device, for creating a switching system within the switch device,
the ASIC including an ingress packet processor, an egress packet assembly device, a transmit control device and a routing device; whereby the ingress packet processor is disposed to receive a data packet, the routing device is adapted to route the data packet from the ingress packet processor to the egress packet assembly device and the transmit control device is disposed to control the routing of the routing device;
an ingress port communicating with the ASIC and being connectable to one or more external computer network devices, the ingress port being a substantially standard switch port;
an egress port communicating with the ASIC and being connectable to one or more external computer network devices, the egress port being a substantially standard switch port; and,
an extender port, the extender port being connectable to another extender port in loopback fashion and being connectable to a corresponding extender port of a discrete switch device, whereby the extender port operates on a discrete protocol from the standard ports;
whereby the ASIC is adapted to provide for alternatively transmitting a data packet locally to the egress port and remotely through the extender port.

11. A system of a plurality of switch ASICs, each switch ASIC having the limitations of the ASIC of claim 10; wherein the plurality of switch ASICs are connected each one to each other switch ASIC, and wherein each of the plurality of switch ASICs are adapted to transmit a data packet locally or remotely to any of the other connected switch ASICs, whereby the direct connections of the switch ASICs obviates the need for non-ported switch devices.

12. A system of a plurality of switch devices, each of said devices having the limitations of the switch device of claims 1- 9; wherein the plurality of switch devices are connected each one to each other switch device via connections between the respective extender ports thereof, and wherein the ASICs of each switch device are adapted to transmit a data packet locally or remote ly to any of the other connected switch devices via the connections between the respective extender ports thereof.

13. A method of operating a switch in a communications network, the switch containing one or more ASICs, the method comprising:
receiving a data packet within the switch;
looking up a destination port address in a look-up table, the destination port address including local or remote routing information; wherein the local or remote routing information distinguishes whether routing to a destination port address is available via a local or a remote route;
routing the data packet according to the destination port address and local or remote routing information, wherein routing using local or remote routing information includes the capability to route the data packet through either an entirely local or entirely remote route.

14. A method according to claim 13 wherein the looking up operation is a two-part operation and optionally
wherein the remote or local information is kept separate from the port destination information.

15. A method of managing a switch system in a communications network, the switch system containing one or more switch devices, the method comprising:
discovering one or more switch devices via any connections extant therebetween;
building a look-up table of port destination information based upon the discovering operation; and
operating the switch system.

16. A method according to claim 15 wherein the building operation includes one or more of building a look-up table of local or remote location information to be maintained separate from a look-up table of port destination information.

17. A method according to claim 15 wherein the operating operation includes:
receiving a data packet within the switch;
looking up a destination port address in a look-up table, the destination port address including local or remote information;
routing the data packet according to the destination port address and local or remote information.
